# EUROPEAN PATENT APPLICATION

(11) **EP 1 790 615 A1**
(43) Date of publication of application: **30.05.2007**
(21) Application number: 05425844.7
(22) Date of filing: 29.11.2005
(51) Int. Cl.: C01F 11/18, B02C 13/24, B01F 7/26, B01F 13/10, C04B 2/08

(54) **Device for the preparation of precipitated calcium carbonate**

(71) Applicant: Trading engineering technologies LLC, Lewes 19958 (US)
(72) Inventor: Foster, John B., La Alegria, Praderas del Rocio, City of Panama (PA)
(74) Representative: Leihkauf, Steffen Falk

(57) **Abstract**

A device (1) for the preparation of PCC includes a recarbonation reactor(2) with a first mill (10) and a second mill (11)located inside the recarbonation reactor(2), where each mill (10, 11) includes a first agitation surface (14; 14') and a second agitation surface (15; 15')facing the first agitation surface (14; 14') and roundable as to the first agitation surface (14; 14'). The first mill (10) and the second mill (11) are positioned coaxial and axial staggered so that the relative rotation between their first and second agitation surfaces happens around a common axis (R). The reactor (2) includes an impact and guide surface (17) located in order to invert the sense of the radial movement of the reaction mixture (9) coming out from the first mill (10) and bring this reaction mixture (9) near the common axis (R) before it enters the second mill (11).

## Description

The invention relates to a device for producing precipitated calcium carbonate (PCC).

There is a growing need of fine and ultra fine dust of very pure calcium carbonate, in particular from the chemical, metallurgical, food and paper industries.

The production of dusty calcium carbonate in large quantities is usually carried out through a reaction of carbonatization inside a process with the following three main phases:
- Burning (calcination) of natural limestone CaCo₃ to obtain the lime CaO with the reaction CaCO₃ + heat -> CaO + CO₂
through a calcination kiln;
- the carbonatization between the lime CaO in water solution (milk of lime) and the carbon dioxide CO₂ to obtain a pure precipitated carbonate calcium (PCC) thanks to the reaction

   Ca(OH)₂ + CO₂ -> CaCO₃ + H₂O + heat
through a recombination reactor;
- the thickening and the drying of the precipitated calcium carbonate (PCC), till now suspended in the water (PCC slurry), to obtain fine pure calcium carbonate dust with a minimal quantity of humidity.

This invention regards the phase of carbonatizating between the lime CaO in water solution (lime milk) and the carbon dioxide CO₂ in water solution to obtain precipitated calcium carbonate (PCC).

It is used to feed a gas containing carbon dioxide CO₂, for example the filtrated exhausted gases coming from the calcination kiln, composed by about 30% in volume of CO₂ and 70% in volume of nitrogen, in a water mixture of calcium hydroxide Ca(OH)₂ having a solid contents of about 20%. Because of the low solubility of the calcium hydroxide in water, this watery solution, lime milk, is a suspension in water of solid micro particles of Ca(OH)₂ with only a small quantity of dissolved calcium hydroxide. The passage of Ca(OH)₂ from the solid state to the solution state is very slow, while the electrochemical dissociation of the calcium hydroxide dissolved in the ions Ca²⁺ e 2OH⁻ is very quick.

The passage of the carbon dioxide from the gas state to the state in solution CO₂ + H₂O -> H₂CO₃ is quite slow, while the dissociation of the carbonic acid H₂CO₃ in the ions 2H⁺ e CO₃²⁻ is quick.

As the cations Ca²⁺ and the anions CO₃²⁻ form, they combine immediately producing the precipitated calcium carbonate CaCO₃ with a very low solubility.

The carbonatization reaction till now described happens solidly in the recarbonation reactors equipped with means of agitation to increase the speed of the two slowest processes, it means the solution in water of the calcium hydroxide and the carbon dioxide.

The speed of reaction in mass with the same volume is nevertheless not satisfactory.

The purpose of this invention is therefore that to find a device to prepare precipitated calcium carbonate PCC with such characteristics to quick drastically the carbonatization reaction.

This and other purposes are reached through a device to prepare the PCC, including:
- a recarbonation reactor;
- a first and a second mill located inside the recarbonation reactor, each one includes a first agitation surface and a second one faces the first and rotating as to the first, in order to be able to mix and shake a reaction mixture (lime milk + CO₂) located between the first and the second agitation surface and convey it radial to the external, where the first mill and the second mill are disposed in coaxial way and axially offset, so that the respective rotation between their first and second reaction surfaces happens around a common axis, where the reactor includes an impact and guide surface disposed in order to invert the radial movement sense of the reaction mixture, came out from the first mill and guide this reaction mixture near the common axis before it enters the second mill.

To better understand the invention and appreciate its advantages, some illustrative and not limitative ways of realizations will be described, in reference to the enclosed images, where:

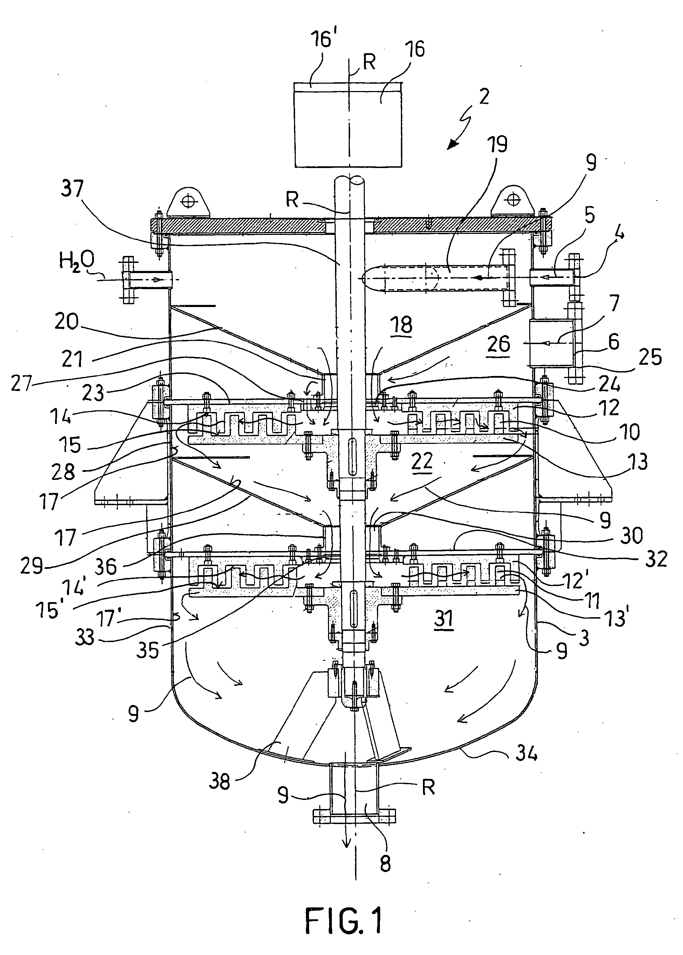

- Fig. 1 is a longitudinal section view of a recarbonation reactor of the device according to one way of realization of the invention;

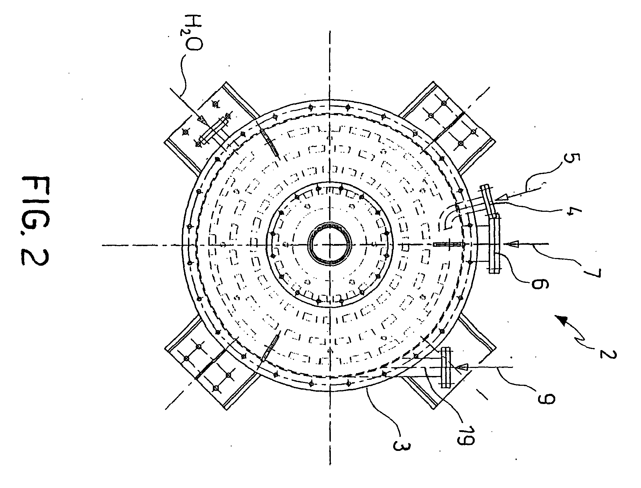

- Fig.2 is a transversal section view of the recarbonation reactor in fig.1;
- Fig.3 is a front view of a particular of the recarbonation reactor in fig.1;
- Fig.4 is a section view as per the line IV-IV in fig.3;
- Fig.5 is a frontal view of another particular of the recarbonation reactor in fig.1;
- Fig.6 is a section view as per the line VI-VI in fig.5;
- Fig.7 is a transparent view of another particular of the device according to the invention;
- Fig.8 shows schematically the whole and the working of the device according to one way of the realization of the invention;

With reference to the pictures, a device for the preparation of PCC is indicated with the reference 1. The device 1 includes a reactor 2, having an housing 3, that delimitates a loading opening 4 to load the lime milk 5, a separate inlet opening 6 for the CO₂ 7 and a discharging opening 8 for the reaction product or, when the reaction is not yet completed, for the reaction mixture 9.

Inside the housing 3 a first mill 10 and a second mill 11are positioned. Each mill 10,11 includes a first plate 12,12' disk-shaped and a second plate 13,13' disk-shaped substantially parallel and positioned so that, a first agitation surface 14,14' formed on the first plate 12,12' and a second agitation surface 15,15' formed on the second plate 13,13' are faced. The second plates 13,13' are revolving, through at least one electric motor 16, as to the first plates 12,12' in order to make the second agitation surfaces 15,15' rotate as to the first agitation surfaces 14,14' around the rotation axis, in order to mix and shake a reaction mixture (lime milk + CO₂) located between the first 14,14' and the second agitation surface 15,15' of each mill 10,11 and conveying it radially to the external. The first 10 and the second mill 11 are located axially staggered and coaxial, so that the respective rotation between their first 14,14' and second agitation surfaces 15,15' happen around a common axis R. The reactor 2 includes also an impact and guide surface 17 located and shaped in order to invert the radial movement sense of the reaction mixture 9 coming out from the first mill 10 and guide this reaction mixture 9 near the common axis R before it enters the second mill 11.

In particular, in the upper part of the housing 3 it is formed a loading chamber 18, into where the loading opening 4 for the lime milk 5 and another reloading opening 19 for the reaction product 9 flow. The loading chamber 18 includes a back-wall 20 almost truncated cone or funnel-shaped with a central opening 21 for the connection of the loading chamber 18 with a first agitation chamber 22, located under the loading chamber 18.

The first agitation chamber 22 is delimitated in the upper part by a wall 23, sideways by an almost cylindrical wall 28 of the housing 3, in the bottom by a wall almost truncated cone-shaped 29. The upper wall 23 is almost flat and delimitates a central opening 24, connected with the central opening 21 of the loading chamber through a tubular section of passage 25, that permit the loading of the lime milk 5 or the reaction product 9 recirculated by the loading chamber 18 in the first agitation chamber 22.

Between the back wall 20 of the loading chamber 18 and the upper wall 23 of the first agitation chamber 22 it is formed a inlet chamber 26, into where the inlet opening 6 for the CO₂ flows. In the upper wall 23 of the first agitation 22 it is formed an inlet hole 27, that realizes a passage for the CO₂ from the inlet chamber 26 and the first agitation chamber 22. This inlet hole 27 is preferably formed next to the central opening 24 and the common axis R.

The truncated cone-shaped back wall 29 of the first agitation chamber 22 delimitates a central opening 30 for the connection of the first agitation chamber 22 with a second agitation chamber 31 located under the first agitation chamber 22.

This second agitation chamber 31 is delimitates in the upper part by a wall 32, sideways by an almost cylindrical wall 33 of the housing 3 and on the bottom by a rounded back-wall 34 of the same housing 3. In the lowest point of the back-wall 34 it is formed the discharging opening 8 of the reactor 2. The upper wall 32 is preferably substantially flat and delimitates a central opening 35, connected with the central opening 30 of the first agitation chamber 22 through a tubular section of passage 36, that allows the passage of the reaction product 9 from the first agitation chamber 22 to the second agitation chamber 31.

In the first agitation chamber 22 it is located the first mill 10, that shake and mix the lime milk with the CO₂ conveying this mixture from the central zone, where there's the inlet hole 27 and the section of passage 25, thanks to the centrifugal force and to the continuity of the second agitation surface 15, radial to the external. The reaction mixture, after coming out from the first mill 10, collides with the collision and guide surface 17, formed by the cylindrical wall 28 and the truncated cone-shaped wall 29, that cause an inversion of the radial movement sense of the reaction mixture 9, conveying it radial to the centre of the back truncated cone-shaped wall 29. The reaction mixture is conveyed to the central opening 30 of the back-wall 29 of the first agitation chamber 22 and pass, through the tubular section of passage 36, to the central zone of the second agitation chamber 31.

In this second agitation chamber is located a second mill 11, that shakes and mixes the reaction mixture, conveying this mixture from the central zone, where there is the section of passage 36, thanks to the centrifugal force and the continuity of the second agitation surface 15', radial to the outside. The reaction mixture 9, after coming out from the second mill 11, collides with a second collision surface 17' formed by the cylindrical walls 33 and rounded 34, that cause again an inversion of the radial movement sense of the reaction mixture that is hosted in correspondence of the discharging opening 8 of the reactor.

Advantageously, a driving shaft 37 extends along the axis R from the outside of the housing 3 throughout the loading chamber 18 and the tubular section of passage 25 in the first agitation chamber 22 and from this one, through the tubular section of passage 36, till the second agitation chamber 31, where it is supported rotating by a support structure 38.

The first plate 12 of the first mill 10 is preferably solidly connected to the upper wall 23 of the first agitation chamber and the second plates 13 of the first mill 10 is fixed to the driving shaft 37, so that the first 14 and the second agitation surface 15 lean out. The driving shaft 37 transmits the rotary movement from the motor 16 to the second plates 13 to make it turn as to the first plate 12. The second plate 13 is also shaped and connected to the driving shaft in order to create a guide surface almost impenetrable, that prevents a passage of the reaction mixture 9 into the central zone so that the whole reaction mixture is conveyed, between the two plates of the first mill 10, radial to the outside.

Likewise described for the first mill 10, the first plate 12' of the second mill 11 is preferably solidly connected to the upper wall 32 of the second agitation chamber and the second plate 13' of the second mill 11 is fixed to the driving shaft 37 so that the first 14' and the second agitation surface 15' lean out. The driving shaft 37 transmits the rotation movement from the motor to the second plates 13' to make it turn as to the first plate 12'. The second plate 13' is also shaped and connected to the driving shaft, in order to create a guide surface almost impenetrable that does not permit the passage of the reaction mixture to the central zone so that the all reaction mixture is conveyed, between the two plates of the second mill 11, radial to the outside.

According to one of the realization, the fires and the second mill almost have the same shape.

Advantageously, each one of the first 14,14' and second 15,15' agitation surfaces of the two mills forms a plurality of annular groups of protuberances 39, located on a radial offset circumferences as to the common axis R.

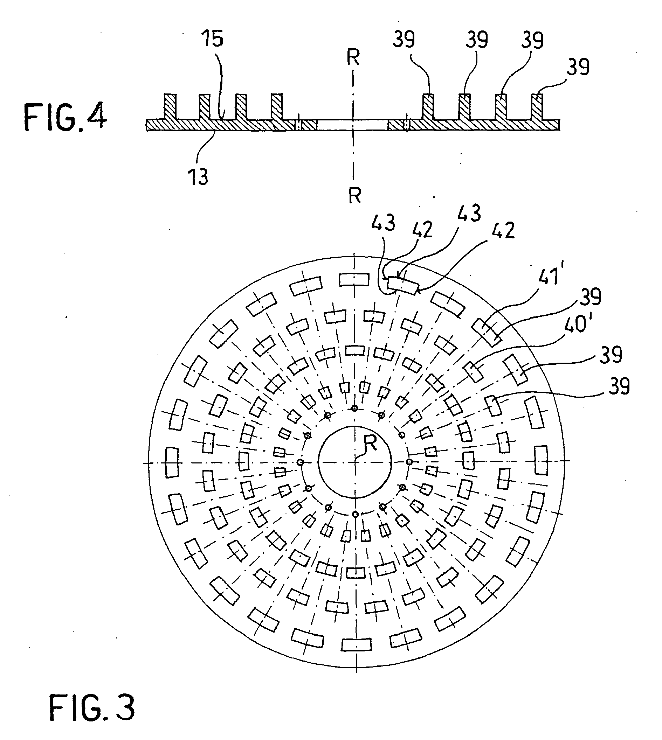

According to the realizations shown in fig.3,4,5 and 6, the protuberances 39 of a group 40 are angularly offset as to the protuberances 39 of the adjoining group 41 of the same agitation surface and include preferably protuberances 39

with two surfaces 42 almost flat and radial to the common axis R and two curved surfaces 43 with a circumferentially direction to the common axis R. The first plates 12,12' and the second 13,13' are located so that the groups of protuberances 39 of the first agitation surface 14,14' lean out in almost annular spaces formed between the groups of protuberances 39 of the second agitation surfaces 15,15'.

Advantageously, the circumferentially extension of the protuberances 39 of a first group 40 is inferior to the circumferentially extension of the protuberances 39 of the second group 41 radial located more to the outside of the same agitation surface and preferably the protuberances 39 of different groups 40,41 of the same agitation surface 14,14',15,15' have a radial extension or radial thickness almost identical.

According to the favourite realization, the protuberances 39 of different groups 40,41 of the same agitation surface 14,14',15,15' have an angularly extension (in a radial plan to the common axis R)almost identical and the angularly extension of the protuberances 39 of a group 40 are partially placed one upon the angularly extensions of the protuberances 39 of the group or of the radial adjoining groups 41 of the same agitation surface and, preferably, the angularly extensions of the protuberances 39 of a group 40 of the first agitation surface 14,14' are partially placed one upon the angularly extensions of the protuberances 39 of the group or of the radial adjoining groups 40'of the second agitation surface 15,15' of the second agitation surface faced the first agitation surface 14,14'.

In other words, the angularly extension of the protuberances 39 of a group is higher than the angularly extension of the spaces defined between two protuberances 39 circumferentially adjoining to the same group and the group or the radial adjoining groups of the same agitation surface. Preferably, the angularly extension of the protuberances 39 of a group of an agitation surface (first or second) is also higher than the angularly extension of the spaces defined between two protuberances 39 circumferentially adjoining of the group or the groups radial adjoining of the agitation surface (first or second) that faces it.

Thanks to the characteristics of the mills till now described, it is obtained a unusual emulsifying effect of the reaction mixture that speeds up the processes of solution in water of Ca(OH)₂ e CO₂.

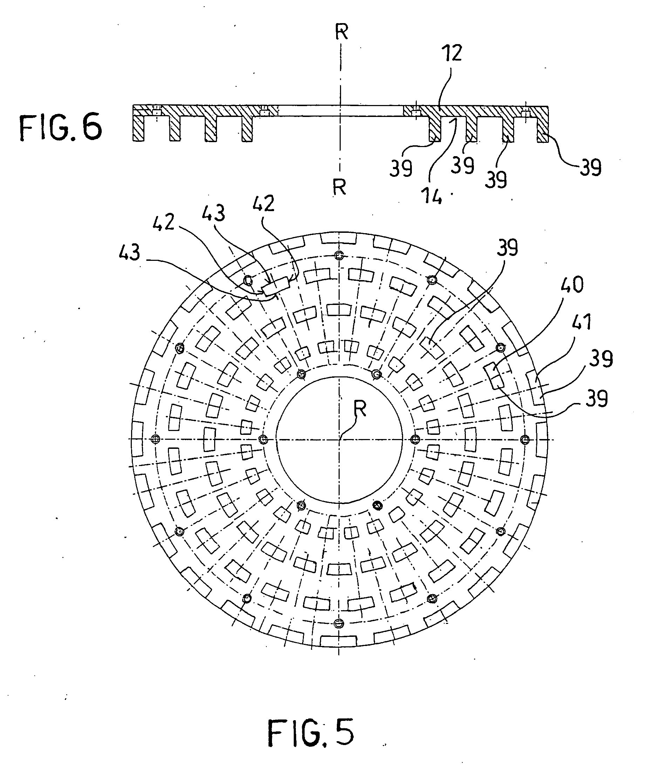

According to the realization shown in fig.3 and 5, the first agitation surface 14,14' has four annular groups of protuberances 39 and also the second agitation surface 15,15' has four annular groups of protuberances 39, where three of the four groups of the first agitation surface 14,14' lean out into the three annular spaces defined among the groups of the second agitation surface 15,15' and three of the four groups of the second agitation surface 15,15' lean out into the three annular spaces defined among the groups of the first agitation surface 14,14'.

Advantageously, the protuberances 39 of each annular group are angularly constantly located along the respective circumference, preferably every 15°, so that each group includes twenty-four protuberances 39.

The first plate 12,12' and the second plate 13,13' of each mill are in aluminium alloy and the protuberances are together with the plates, for example through the turning, and the agitation surfaces are hardened, for example through the nickeling. In this way it is obtained a reduction of the weight and the rotational inertia of the plates with the same resistance to the abrasion.

According to a realization, the relative rotation speed between the first agitation surface 14,14' and the second agitation surface 15,15' of the mills 10,11 is variable, for example thanks to an inverter 16' to change the electrical feeding of the motor 16.

At the beginning of the loading opening 4 of the recarbonation reactor2 are located some cooling means, for example a plates heating exchanger 44 to cool the lime milk 5 before it is loaded in the recarbonation reactor2. This decrease of temperature causes an increase of the solubility of Ca(OH)₂ and CO₂ in the water and therefore speeds up the electrochemical dissociation and permit to have a very fined PCC.

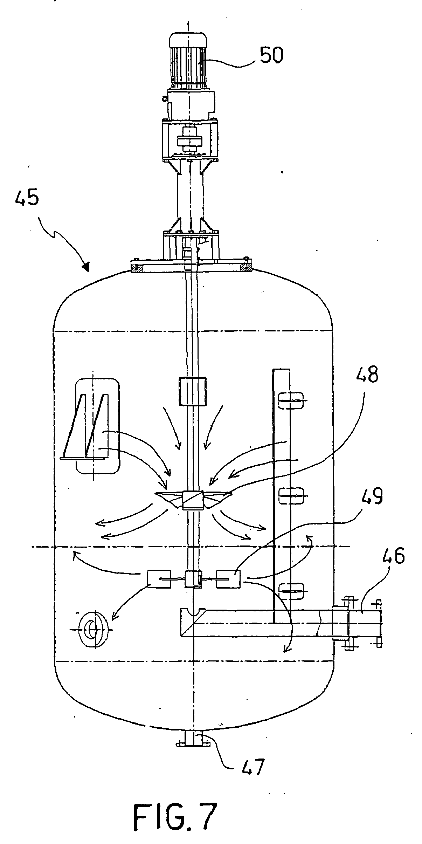

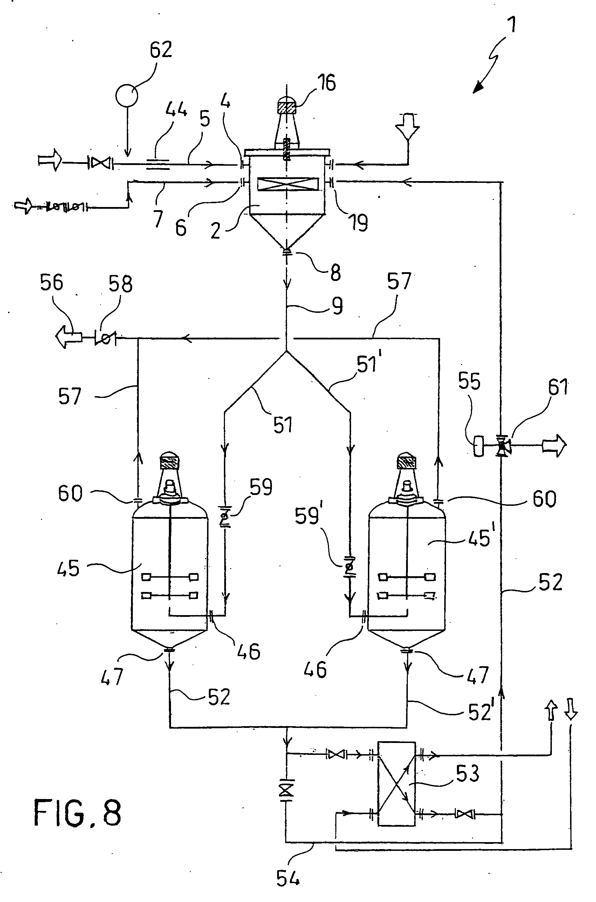

With reference to the realization shown in fig.7 and 8, the device 1 includes one or more post reactors 45,45' with a loading opening 46 and a discharging opening 47 as well as the means of mix located inside each post reactor 45,45' fitted to shake and mix the reaction mixture 9. The means of mix includes a propeller rotor 48 and a runner 49, drivable in rotation through an electrical motor 50 located outside the post reactor 45,45'.

The recarbonation reactor2 is connected with each post reactor 45,45' through a special tubing 51,51' to convey the reaction mixture 9 from the discharging opening 8 of the recarbonation reactor2 to the loading opening 46 of the post reactors 45,45'.

According to a realization, the device 1 includes a recirculating circuit fitted to convey the reaction mixture 9 discharged through the discharging opening 8 of the recarbonation reactor2 to complete the reaction.

Advantageously, also to the recirculation circuit are associated cooling means, better if located at the beginning of the reloading opening 19 of the recarbonation reactor2 and fitted to cool the reaction mixture 9 before its reloading in the recarbonation reactor2. It means that the recirculating circuit is realizable through one or more recirculating duct 52,52' that realize a connection of fluid between the discharging opening 47 and each post reactor45, 45' and the reloading opening 19 of the recarbonation reactor2 and a heat exchanger, for example with plates 53, in thermal exchange relation with the recirculating conducts 52,52'.

Advantageously, it is foreseen a by-pass conduct 54 to the recirculating conduct 52,52' that rounds the heat exchanger 53 and permit to send a sample of the reaction product to sensor means 55 to monitor the advancement of the reaction. According to a realization, the senor means 55 for the monitoring include means that measure the pH value of the product in reaction and/or means that measure the temperature of the product in reaction.

To speed up the recombination of PCC it is foreseen means that regulate and fix a particular pressure inside the recarbonation reactor2 and/or inside the post reactors 45,45'. Advantageously, the means to regulate the pressure maintain, while the device 1 works, the pressure inside the recarbonation reactorand the post reactors to an higher value than the atmospheric pressure in order to increase the solubility of Ca(OH)₂ e CO₂ in the water.

A realization foresees a Vent manifold 56 fitted with means to maintain the Vent manifold at controlled pressure, for example a modulating valve 58, and a gas conduct 57 that connects the post reactors 45, 45' to the Vent manifold to discharge the gas of the post reactors, through the Vent manifold, in the ambient.

It will be now described the working of the device, as per the invention.

The lime milk has a temperature of about 70°C and is cooled by an heat exchanger 44 before being loaded, through a loading opening 4 in the reactor of recarbonation. The gases coming from the calcination kiln and including about 30% in volume of the CO₂, after having been dusted and desulphurized, are compressed by one or more compressor and put into the reactor of recarbonation, through the inlet opening 6. The two fluxes (lime milk, CO₂) are put into the loading chamber 18 and the inlet chamber 26 with the exact proportions and, thanks to the opening 21 and 27 they are mixed during the feeding at the first mill. After having passed through the first phase of mix-shake-emulsion realized by the first mill, the reaction mixture passes through the second phase of mix-shake-emulsion realized by the second mill.

After the two phases of mix-shake-emulsion, the reaction mixture is hosted on the bottom of the recarbonation reactorand it's sent, through the discharging opening 8 and the tubing 51,51' and one or both the post reactors 45,45', for example through a controlled opening of automatic valves ON-OFF 59, 59'. In the post reactors the reaction mixture is maintained in agitation thanks to the action of two manifolds 48,49 that permit the progress of the carbonatization.

The gas of the post reactors 45,45'is discharged through the gas discharging opening 60 and the gas conduct 57 and inlet in the Vent manifold 56 maintained at a controlled pressure of the modulating valve 58 before being discharged in the ambient. In this way, the gas CO₂ pressure in the reactor is about 0,1 - 0,2 bar higher than the one in the Vent manifold.

As already mentioned, the presence of a pressure in the recarbonation reactorand in the post reactor higher than the atmospheric pressure supports the dissolution of the CO₂ in the water and, consequently, the formation of CO₃²⁻, contributing to the increase of the reaction speed. As example, not limitative, it is now described two ways of use of the device.

### Example of use with only one post reactor

- Continuous feeling of the lime milk and the CO₂ to the recarbonation reactortill to reach the volume of batch in the post reactor.
- Recirculating of the reaction mixture from the post reactor to the reactor through the heat exchanger 53 cooled with water in order to maintain the reaction temperature at best value.
- Sending of a sample of the reaction mixture, through the by-pass conduct 54 to the monitoring system 55. The monitoring system signals when the pH value is passed from about 12 to about 7,5, useful for the complete reaction of the calcium hydroxide. The monitoring system signals also the difference between the temperature of the reaction mixture going into the recarbonation reactorand the temperature of the reaction mixture coming out from the post reactor and signals when this difference of temperature has a value of about zero, indicating that the reaction has been completed.
- At completed reaction, the three-way valve 61 sends the reaction product - lime milk - to a gravity decanter (not shown in the figures), emptying completely the post reactor used during the reaction. When the emptying of the post reactor starts, it is possible to start a new reaction cycle using for example the other reactor.

### Example of use with two post reactors

- Feeding of the lime milk and the CO₂ to the recarbonation reactortill to reach 1/3 of the volume of batch in the first post reactor.
- Interruption of the feeding of the lime milk and CO₂ to the recarbonation reactorand transfer of the under-batch (1/3 batch) from the first post reactor, through the heat exchanger 53 and the recarbonation reactor2, to the second post reactor. This procedure permits a better control of the reaction temperature that results in a better uniformity of the PCC particles.
- Going on with the feeding of the lime milk and CO₂ to the recarbonation reactortill to reach 1/3 of the volume of batch in the first post reactor and transfer of the second under-batch (1/3 batch) from the first post reactor to the second post reactor as already described.
- Going on with the feeding of the lime milk and CO₂ to the recarbonation reactortill to reach 1/3 of the volume of batch in the first post reactor and transfer of the third under-batch (1/3 batch) from the first post reactor to the second post reactor as already described.
- When all the batch is in the second post reactor, a recycle of the reaction mixture is done, as described in relation with the procedure with only one reactor.

The above described sequences are controlled by the automatic valves ON OFF 59, 59', which are controlled by a control unit (not shown in the figures).

In accordance with a realization it is foreseen a metering pump 62 to put possible chemical additives, foreseen to adapt the characteristics of PCC to its uses, into the recarbonation reactor2. The invention regards also plants with one or more groups of reaction-carbonization located in parallel, for example four groups and each one includes a recarbonation reactorand two or more post reactors.

The device as per the invention permits to obtain an high reaction efficiency and a low dimension of the device with the same capacity of production of PCC.

The device permits also to make easily the regulation to obtain the highest efficiency of the carbonatization process, in particular the recirculation reactor-post reactor, in order to be able to produce PCC with the dimensions of the particles and the type of crystal desired.

## Claims

1. Device (1) for the preparation of PCC, comprising:
- a recarbonation reactor (2) with a loading opening (4) for the lime milk, an inlet opening (6) for the CO₂ (7) and a discharging opening (8) for the reaction mixture (9);
- a first mill (10) and a second mill (11) located inside the recarbonation reactor(2),
wherein each mill (10,11) includes a first agitation surface (14; 14') and a second agitation surface (15; 15') facing the first agitation surface (14; 14') and rotatable with respect to the first agitation surface (14; 14'), in order to be able to mix the reaction mixture (9) located between the first and the second agitation surface and convey it radially to the outside,
wherein the first mill (10) ad the second mill (11) are arranged coaxially and axially offset such that the relative rotation between their first and second agitation surfaces occurs around a common axis (R),
wherein the reactor (2) includes an impact and guide surface (17) arranged such as to invert the sense of the radial movement of the reaction mixture (9) coming out from the first mill (10) and to guide said reaction mixture (9) near the common axis (R) before it enters the second mill (11).

2. Device (1) to claim 1, wherein each one of the first (14; 14') and the second agitation surfaces (15; 15') forms a plurality of annular groups (40,41) of protuberances (39) located on radially offset circumferences with respect to the common axis (R),
wherein the protuberances (39) of a group (40; 41) are angularly offset with respect to the protuberances (39) of the adjacent group (41;40) of the same agitation surface (14;14',15;15').

3. Device (1) according to claim 2, wherein the protuberances (39) comprise protuberances (39) with two substantially flat surfaces which are radial to the common axis (R) and two surfaces (43) which are curved along a circumferential direction with respect to the common axis (R).

4. Device (1) according to claim 2 or 3, wherein the groups of protuberances (39) of the first agitation surface (14; 14') project in substantially annular spaces formed between the groups of protuberances (39) of the second agitation surface (15; 15').

5. Device (1) according to claims 2, 3 or 4, wherein the circumferential extension of the protuberances (39) of one first group (40) is less than the circumferential extension of the protuberances (39) of a second group (41) disposed radially externally with respect to said first group in the same agitation surface (14;14', 15; 15').

6. Device (1) according to any one of claims 2 to 5, wherein the protuberances (39) of different groups (40; 41) of the same agitation surface have a substantially identical radial extension.

7. Device (1) according to any one of claims 2 to 6, wherein the protuberances (39) of different groups (40; 41) of the same agitation surface have a substantially identical angular extension.

8. Device (1) according to any one of claims 2 to 7, wherein the angular extension of the protuberances (39) of one group overlap partially the angular extension of the protuberances (39) of the radially adjacent group or groups of the same agitation surface.

9. Device (1) according to any one of claims 2 to 8, wherein the angular extension of the protuberances (39) of one group is greater than the angular extension of the space defined between two adjacent protuberances of the same group and of the radially adjacent group or groups of the same agitation surface.

10. Device (1) according to any one of claims 2 to 9, wherein:
- the first agitation surface (14; 14') has four annular groups of protuberances (39);
- the second agitation surface (15; 15') has four annular groups of protuberances (39),
and wherein:
three groups of the first agitation surface project in the three annular spaces defined between the groups of the second agitation surface.

11. Device (1) according to any one of claims 2 to 10, wherein the protuberances (39) of each group are arranged with substantially constant angular distances along the respective circumference.

12. Device (1) according to the previous claim, wherein each group (40, 41) includes twenty-four protuberances (39).

13. Device (1) according to any one of the previous claims, wherein the first agitation surface (14; 14') is formed in a first plate (12) and the second agitation surface (15;15') is formed in a second plate (13) rotatable with respect to the first plate (12).

14. Device (1) according to the previous claim, wherein the first plate (12) and the second plate (13) are in aluminium alloy and the protuberances (39) are formed integrally with the plates (12, 13).

15. Device (1) according to any one of the previous claims, wherein the agitation surfaces (14; 14', 15; 15') are surface-hardened.

16. Device (1) according to anyone of the previous claims, comprising:
- one or more electrical motors (16) connected through transmission means (37) to the second agitation surfaces (15; 15') such as to enable the second agitation surfaces (15; 15') to rotate with respect to the first agitation surfaces (14; 14').
- adjusting means (16') connected to the motor (16) and suitable to change the relative rotation speed between the first agitation surface (14; 14') and the second agitation surface (15; 15').

17. Device (1) according to anyone of the previous claims, comprising cooling means (44) arranged upstream the loading opening (4) and suitable to cool the lime milk before it is loaded into the recarbonation reactor (2).

18. Device (1) according to anyone of the previous claims, comprising mixing means (24, 27) located inside the recarbonation reactor(2) and suitable to join the lime milk and the CO₂ during their feeding in the first mill (10).

19. Device (1) according to any one of the previous claims, further comprising:
- one or more post reactors (45, 45') having a loading opening (46) and a discharging opening (47), as well as mixing means (48, 49) arranged inside each post reactor (45, 45') and suitable for shaking and mixing the reaction mixture (9);
- means (51, 51', 59, 59') for conveying the reaction mixture (9) from the discharging opening (8) of the recarbonation reactor (2) to the loading opening (46) of the post reactors (45, 45').

20. Device (1) according to the previous claim, wherein the mixing means comprise a propeller rotor (48) and a runner (49), drivable in rotation through an electric motor (50) arranged outside the post reactor (45,45').

21. Device (1) according to anyone of the previous claims, comprising means (56, 57, 58) that adjust the pressure inside the recarbonation reactor (2) and/or inside the post reactors (45, 45').

22. Device (1) according to the previous claim, wherein these pressure adjusting means comprise:
- a Vent manifold (56);
- means (58) suitable to keep the Vent manifold (56) at a controlled pressure;
- a gas conduct (57) in fluid connection with the post reactor (45, 45') and with the Vent manifold (56) and suitable to discharge the gas coming from the post reactor, through the Vent manifold, in the ambient.

23. Device (1) according to the previous claim, wherein these pressure adjusting means maintain, during the operating of the device, the pressure inside the ricarbonation reactor and the post reactors at an higher value than the atmospheric pressure.

24. Device (1) according to anyone of the previous claims, comprising recirculating means (52, 52') suitable to convey the reaction mixture from the discharging opening (8) of the recarbonation reactor (2) again in the recarbonation reactor (2) to increase its percentage of PCC.

25. Device (1) according to claim 24, including cooling means (53) located upstream of a re-loading opening (19) of the recarbonation reactor (2) and suitable to cool the reaction mixture before it is reloaded in the recarbonation reactor (2).

26. Device (1) according to the previous claim, comprising:
- one or more recirculating conducts (52, 52') that realize a fluid connection between the discharging opening (47) of each post reactor (45, 45') and a re-loading opening (19) of the recarbonation reactor (2);
- a heat exchanger (53) in thermal exchange relationship with the recirculating conduct (52, 52') to cool the reaction mixture (9);
- means (55) for monitoring the progress of the reaction;
- a by-pass conduct (54) at the recirculating conduit (52, 52') that by-passes the heat exchanger (53) and that is suitable to send a sample of the reaction mixture to the monitoring means (55).

27. Device (1) according to the previous claim, wherein the monitoring means (55) include means that measure the pH value of the reaction mixture;

28. Device (1) according to claims 26 or 27, wherein the monitoring means comprise means for measuring the temperature of the reaction mixture.
